# EUROPEAN PATENT SPECIFICATION

(11) **EP 3 954 473 B1**
(45) Date of publication and mention of the grant of the patent: **16.09.2026**
(21) Application number: 21190640.9
(22) Date of filing: 10.08.2021
(51) Int. Cl.: B07C 5/342, B29B 17/02, B07C 5/02

(54) **A METHOD OF PROCESSING WASTE MATERIAL TO PRODUCE VARIOUS GRADES OF PLASTICS, CORRESPONDING SYSTEM AND COMPUTER PROGRAM**
VERFAHREN ZUR VERARBEITUNG VON ABFALLMATERIAL ZUR HERSTELLUNG VERSCHIEDENER KUNSTSTOFFKLASSEN, ENTSPRECHENDES SYSTEM SOWIE COMPUTERPROGRAM
PROCÉDÉ DE TRAITEMENT DE DÉCHETS POUR PRODUIRE DIFFÉRENTES QUALITÉS DE MATIÈRES PLASTIQUES, SYSTÈME CORRESPONDANT ET PROGRAMME INFORMATIQUE

(30) Priority: 11.08.2020 GB 202012488
(43) Date of publication of application: 16.02.2022
(73) Proprietor: BioSci Limited, Shepton Mallet BA4 4HB (GB)
(72) Inventor: Christensen, Mark, Shepton Mallet, BA4 4HB (GB)
(74) Representative: Handsome I.P. Ltd

(56) References cited:
- WO-A1-01/87567
- GB-A- 2 527 544

## Description

The present invention relates generally to a method of processing waste, a system and and a computer program.

With regard to the term "waste" this may be understood as relating to mixed, substantially solid and substantially non-hazardous waste from domestic, municipal, commercial and/or industrial sources.

It is known to process waste in order to extract useful materials for further uses (i.e. the materials are recycled possibly for onward further processing/manufacturing into different products). In particular, it is becoming increasingly important to recycle plastic waste rather than to burn them in energy-from-waste facilities.

However, there are many forms of plastics and it is desirable to separate them into several different types, as follows:
Tier 1: polypropylene plastics, polyethylene plastics and polybromide plastics;
Tier 2: polyethylene terephthalate (PET) plastics, polyethersulfone plastics and polycarbonate plastics; and
Tier 3: polyurethane plastics, PVC plastics, polystyrene plastics, polyamide plastics, ABS, PTFE, latex and silicone plastics.

Due to the ever-changing industrial capabilities to recycle plastic it is desirable to have a process which meets the present situation and also allows for further adjustment and modification to keep pace with changing circumstances.

Some background information may be found in GB2527544A and WO2001087567A1.

In a first aspect, the invention provides a method of processing waste material to produce various grades of plastics comprising the steps of:
(a) receiving waste material;
(b) mechanically separating the waste material into at least three size fractions;
(c) removing at least some metallic objects from one of the at least three size fractions; characterised in that, the method further comprises the steps of:
(d) splitting the one size fraction, after at least some metallic objects have been removed from it, into at least two streams;
(e) mechanically sorting the at least two streams, using a sequence of near-infrared spectroscopy separators, to produce at least three product streams, a first product stream comprising substantially only one or more of polypropylene plastics, polyethylene plastics and polybromide plastics, a second product stream comprising substantially only one or more of polyethylene terephthalate (PET) plastics, polyethersulfone plastics and polycarbonate plastics, and a third product stream comprising substantially only one or more of polyurethane plastics, PVC plastics, polystyrene plastics, polyamide plastics, ABS, PTFE, latex and silicone plastics; and (f) mechanically sorting each of the at least three product streams, using the sequence of near-infrared spectroscopy separators (200, 210, 220, 230, 234, 250, 252, 260, 280, 320, 327, 330), to reduce the amount of materials other than polypropylene plastics, polyethylene plastics and polybromide plastics in the first product stream, polyethylene terephthalate plastics, polyethersulfone plastics and polycarbonate plastics in the second product stream, and polyurethane plastics, PVC plastics, polystyrene plastics, polyamide plastics, ABS, PTFE, latex and silicone plastics in the third product stream, and wherein the step of mechanically sorting each of the at least three product streams is repeated until the purity level of at least one of the at least three product streams reaches at least 90 percent.

In this way, three grades of plastics may be produced. A mechanical near-infrared spectroscopy sorter is employed to separate the different plastics.

The three product streams produced the first time may be sorted again to decrease contamination by plastics belonging to another grade and other non-plastic materials. In this way, the purity of each stream may be increased.

The method may further comprise the step of sorting by hand the at least three product streams to reduce the amount of materials other than polypropylene plastics, polyethylene plastics and polybromide plastics in the first product stream, polyethylene terephthalate (PET) plastics, polyethersulfone plastics and polycarbonate plastics in the second product stream, and polyurethane plastics, PVC plastics, polystyrene plastics, polyamide plastics, ABS, PTFE, latex and silicone plastics in the third product stream.

This may help to decrease contamination by plastics belonging to another grade and other non-plastic materials. In this way, the purity of each stream may be increased.

The method may further comprise the step of shredding one of the other of the at least three size fractions and returning it to step (b). This size fraction may have a size greater than 150mm.

The method may further comprise the step of sorting by hand the waste material after step (b) and before step (c) in claim 1 to remove non-plastic material and black plastics material.

The third of the at least three size fractions may be considered as consisting primarily of "fines" (i.e. under size materials, such as less than 50mm). These may be kept separate and disposed of in other ways not contemplated in this method.

The steps of sorting by hand may be considered to be a quality control step. The method may further comprise the following steps, wherein step (b) is effected by:
passing the waste over a screen, and separating the waste into the at least three size fractions, namely, an over-size fraction, an undersize fraction and a middle size fraction, the middle size fraction comprising waste sized between the over-size fraction and the undersize fraction, wherein the middle size fraction is the one size fraction in steps (c) to (d);
sending the oversize fraction to a shredder for size reduction, and returning it to the screen;
collecting the undersize fraction for onward treatment and/or disposal; and
passing the middle size fraction to a picking belt, where operators remove by hand and separately collect objects which are not plastics, or which are black plastic, for onward re-cycling;
and wherein step (c) is effected by:
   passing the middle size fraction to a ferrous metal removal station to remove ferrous metals and collect them together for onward re-cycling/disposal; and
   passing the one size fraction to a non-ferrous metal removal station to remove non-ferrous metals and collect them together for onward re-cycling/disposal; and wherein step (d) is effected by:
      passing the middle size fraction to a splitter, which splits the middle size fraction into the at least two streams;
      and wherein step (e) is effected by:
         passing the first of the at least two streams through a sequence of near-infrared separators, at each stage removing materials which are not polypropylene plastics, polyethylene plastics and polybromide plastics, to produce the first product stream, such that the purity of the first product stream increases from approximately 70 to 80% after one pass, to more than 80% after two passes; passing the first product stream through a picking belt, where operators remove by hand materials which are not polypropylene plastics, polyethylene plastics and polybromide plastics, such that the purity of the first product stream increases to more than 90%;
         passing the materials removed from the first stream which are not polypropylene plastics, polyethylene plastics and polybromide plastics to another near infra-red separator, which separates the materials into a plastics stream and a paper/card stream;
         passing the plastics stream to another sequence of near infra-red separators, to produce the second product stream, to remove materials which are not polyethylene terephthalate (PET) plastics, polyethersulfone plastics and polycarbonate plastics;
         passing the materials removed from the plastics stream and the first stream to another near infra-red separator, which produces metals and the third product stream;
         passing the paper/card stream to a picking belt where non-paper/card is removed;
         passing the second of the at least two streams produced from the split of the middle size fraction to a sequence of near-infrared separators, at each stage removing materials which are not polypropylene plastics, polyethylene plastics and polybromide plastics;
         passing the second stream to another near-infrared separator, then processing the second stream along with the first stream after the first stream has passed through the sequence of near infra-red separators; and
         passing the materials removed from the second stream to the near infra-red separator which receives the materials removed from the plastics stream and the first stream, for further processing, thereby producing the at least three product streams.

In a second aspect, the invention provides a system adapted to perform the method of the first aspect, the system comprising: receiving means configured to receive waste material; a first separator configured to mechanically separate the waste material into at least three size fractions; and a sequence of near-infrared spectroscopy separators (200, 210, 220, 230, 234, 250, 252, 260, 280, 320, 327, 330) configured to (i) mechanically sort at least two streams, the at least two streams formed by (c) removing at least some metallic objects from one of the at least three size fractions and (d) splitting the one size fraction after at least some metallic objects have been removed from it, to produce at least three product streams, a first product stream comprising substantially only one or more of polypropylene plastics, polyethylene plastics and polybromide plastics, a second product stream comprising substantially only one or more of polyethylene terephthalate plastics, polyethersulfone plastics and polycarbonate plastics, and a third product stream comprising substantially only one or more of polyurethane plastics, PVC plastics, polystyrene plastics, polyamide plastics, ABS, PTFE, latex and silicone plastics and (ii) mechanically sort each of the at least three product streams to reduce the amount of materials other than polypropylene plastics, polyethylene plastics and polybromide plastics in the first product stream, polyethylene terephthalate plastics, polyethersulfone plastics and polycarbonate plastics in the second product stream, and polyurethane plastics, PVC plastics, polystyrene plastics, polyamide plastics, ABS, PTFE, latex and silicone plastics in the third product stream, wherein the sequence of near-infrared spectroscopy separators is further configured to mechanically sort each of the at least three product streams repeatedly until the purity level of at least one of the at least three product streams reaches at least 90 percent.

In a third aspect, the invention provides a computer program comprising instructions to cause the system of the second aspect to execute the steps of the method of the first aspect.

The removal of metallic objects discussed herein includes either or both ferrous and non-ferrous objects and may be effected by using one or more metallic separators. The separators may employ magnets and/or an induced current. Non-ferrous metals may include brass and aluminium.

A vibratory feeder may be used to move the size fraction to the near-infrared spectroscopy in step (e).

The at least one of the three size fractions created in step (b) may have a size range in the range 50 to 150mm.

The size range may be selected dependent on the type of near infrared spectroscopic sorting equipment employed. More than one type of such equipment may be employed at different or the same stages throughout the process.

Means other than a vibratory feeder for moving one of the three size fractions are contemplated such as the use of conveyors.

This method contains the steps necessary for producing three grades of plastic. However, it does not describe other processes for dealing with all of the other waste streams derived during the process. Accordingly, the method may include other steps as discussed below and as claimed herein. For instance, the method may further comprise the step of separating the metals into various types of metal, and/or the further reduction in size of the separated plastics.

Any reference to metal separation may use a magnetic and/or electro-magnetic separator. Non-ferrous metals may be separated using an eddy-current magnet.

The near infrared spectroscopy sorting equipment used in the method may rely on air jets to eject identified items from its conveyor belt. Equally, an X-ray optical sorter may rely on air jets to eject identified items from its conveyor belt.

It is to be understood that the steps of the method do not necessarily have to be performed in the sequence disclosed and that at least some of the steps may be repeated and/or performed at other stages within the process.

One purpose of the invention is to achieve a desired output quality of the Tier 1 and 2 materials to meet the required input specification of third parties which undertake recycling and/or reprocessing of the plastics, for example for monomer production via thermal depolymerisation (also called 'chemical recycling').

The above and other characteristics, features and advantages of the present invention will become apparent from the following detailed description, taken in conjunction with the accompanying drawings, which illustrates, by way of example, the principles of the invention. This description is given for the sake of example only, without limiting the scope of the invention. The reference figures quoted below refer to the attached drawings.
Figure 1 is a flowchart of one way in which the invention may be put into effect; and
Figure 2 is a flowchart of another way in which the invention may be put into effect.

The present invention will be described with respect to particular embodiments and with reference to a drawing but the invention is not limited thereto but only by the claims. The drawings described are only schematic and are non-limiting.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may refer to different embodiments. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other, features included in other embodiments, combinations of features of different embodiments are meant to be within the scope of the invention, and form different embodiments, as would be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

The invention will now be described by a detailed description of several embodiments of the invention.

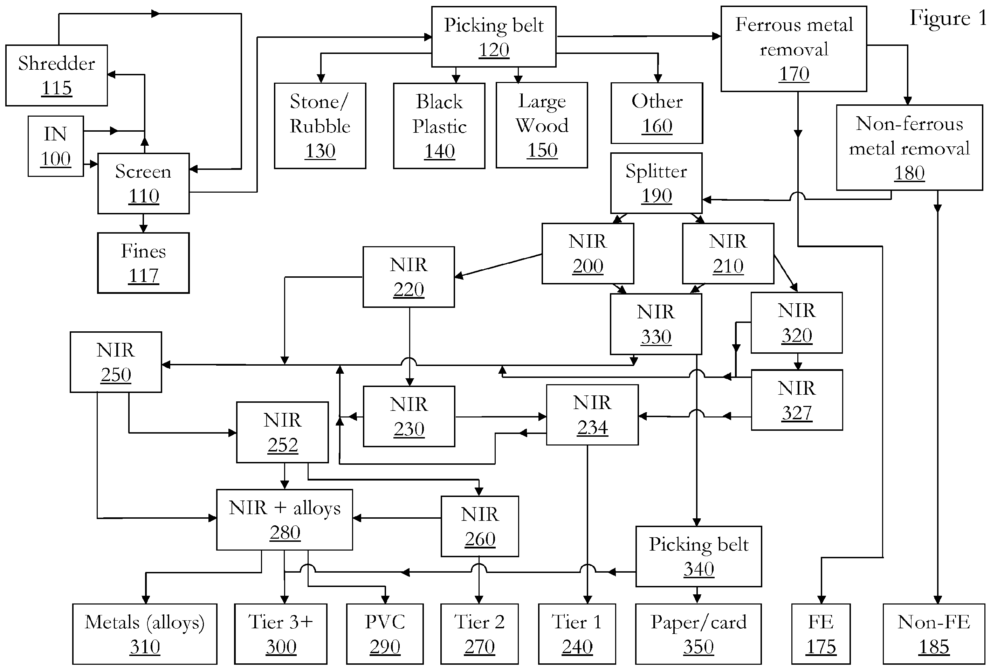

One way of processing waste is shown in Figure 1. As explained already, this is an example of how the waste may be processed. Not all of the elements may be required for it to work, as will be explained below, and other arrangements and features may be included as required.

The waste is received 100, possibly in bales, or loose. Waste will either be sent to a screen before shredding, or direct to the shredder 115 before passing over the screen 110. The screen 110 separates the waste into three size fractions; over-size which is sent to the shredder 115 for size reduction; undersize, or fines 117, which is collected for onward treatment and/or disposal, and the middle size fraction which falls between the two and is passed on for further processing to obtain various grades of plastics for re-cycling and/or disposal.

This middle size fraction is passed to a picking belt 120, where operators remove by hand objects which are clearly not plastics, or which are black plastic 140, such as stone/rubble 130, wood 150, and other materials 160. These items are collected, preferably separately for onward re-use/disposal.

The remainder of the middle size fraction is then passed to a ferrous metal removal station 170 which may use a magnet to remove ferrous metals and collect them together 175 for onward re-cycling.

The remainder of the middle size fraction is then passed to a non-ferrous metal removal station 180 which may use an eddy current generator magnet to remove non-ferrous metals and collect them together 185 for onward re-cycling/disposal.

This de-metalled fraction is then passed to a splitter 190 to split the flow into two streams, although it will be understood that more than two streams may be created if desired.

Following one of these split streams the material is passed through a sequence of near-infrared separators 200, 220, 230, 234 at each stage removing non-Tier 1 (as defined above) plastics such that the purity of the final Tier 1 plastics fraction 240 increases from approximately 70 to 80% after one pass, to more than 80% after two passes, and after three or four passes, plus possibly a final picking belt (not shown) where operators remove by-hand non-Tier 1 plastics, increases to approximately more than 90%. It is desirable for the resultant Tier 1 waste product to have a 90% or more (such as more than 95%) purity level.

In this sequence the non-Tier 1 plastics, separated from the Tier 1 plastics by the near infra-red separator 200 is passed to another near infra-red separator 330 which separates it into two streams; a plastics stream and a paper/card stream. The plastics stream is passed to another sequence of three near infra-red separators 250, 252, 260 to produce, at the end, Tier 2 plastics 270. The other non-Tier 2 streams produced by the near infra-red separators 250, 252, 260 are passed to another near infra-red separator 280 which produces three products; namely metals (alloys) 310, Tier 3+ plastics 300 and PVC 290. In this regard, the metals (alloys) may be removed by an eddy-current magnet.

The non-Tier 1 plastics produced by near infra-red separators 220, 230, 234 are also passed to the near infra-red separator 250 to be processed as described above to produce Tier 2 plastics 270, Tier 3+ plastics 300, PVC 290, and metals (alloys) 310.

The paper/card stream produced by near infra-red separator 330 in the Tier 1 process discussed above is sent to a picking belt 340 where non paper/card is removed such that the resulting stream of paper/card 350 is as pure as possible. The material hand-picked off the picking belt 340 is passed to the Tier 3+ plastics 300 collection point.

Following the other of the two streams resultant from the splitter 190, the material is passed to a sequence of near-infrared separators 210, 320, 327 at each stage removing non-Tier 1 (as defined above) plastics. The resultant stream is then passed to near infra-red separator 234 and processed with the product stream produced by near infra-red separators 200, 220, 230 as described above.

The non-Tier 1 plastics produced by near infra-red separators 210, 320, 327 are also passed to the near infra-red separator 250 to be processed as described above to produce Tier 2 plastics 270, Tier 3+ plastics 300, PVC 290, and metals (alloys) 310.

It is possible, depending on the quantity of waste material being input into the system and reaching the splitter 190, that the two non-Tier 1 streams (220, 230, and 320, 327) are combined such that, for example, the non-Tier 1 output from near infra-red separator 210 is passed to near infra-red separator 220 instead of near infra-red separator 320 for onward processing. Likewise, instead of the above, the non-Tier 1 output from near infra-red separator 320 could be passed to near infra-red separator 230 instead of near infra-red separator 327 for onward processing.

It is desirable for the resultant Tier 2 waste product to have a 90% or more (such as more than 95%) purity level.

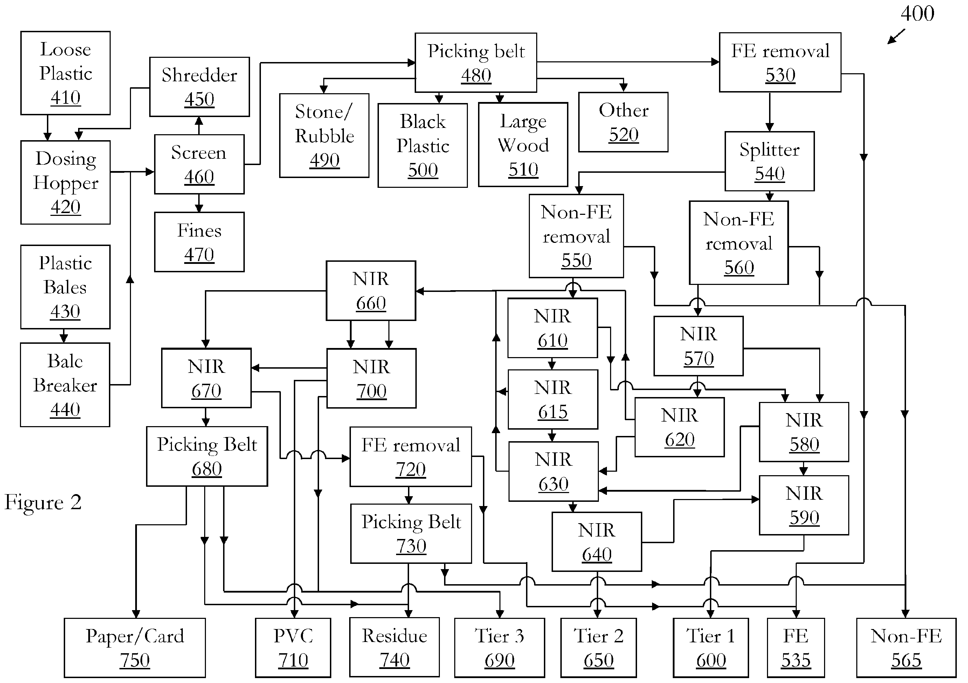

Another way 400 of processing waste is shown in Figure 2. Again, this is an example of how the waste may be processed. Not all of the elements may be required for it to work, as will be explained below, and other arrangements and features may be included as required.

The waste is received as loose plastic 410, or in bales 430. The bales 430 are passed to a bale breaker 440. The loose plastic 410 is passed to a dosing hopper 420. The bale breaker 440 and the dosing hopper 420 pass the waste to a screen 460.

The screen 460 separates the waste into three product streams, (which could be described as size fractions): over-size which is sent to the shredder 450 for size reduction; undersize, or fines 470, which is collected for onward treatment and/or disposal, and the middle stream which falls between the two and is passed on for further processing to obtain various grades of plastics for re-cycling and/or disposal.

This middle stream is passed to a picking belt 480, where operators remove by hand objects which are clearly not plastics, or which are black plastic 500, such as stone/rubble 490, wood 510, and other materials 520. These items are collected, preferably separately for onward re-use/disposal.

The remainder of the middle stream is then passed to a ferrous metal removal station 530 which may use a magnet to remove ferrous metals and collect them together 535 for onward re-cycling.

The remainder of the middle stream is then passed to a splitter 540 to split the flow into two streams, although it will be understood that more than two streams may be created if desired.

Following one of these split streams the material is passed to a non-ferrous metal removal station 550 which may use an eddy current generator magnet to remove non-ferrous metals and collect them together 565 for onward re-cycling/disposal.

The waste then passes through a series of near-infrared separators 610, 580, 590 at each stage removing non-Tier 1 (as defined above) plastics such that the purity of the final Tier 1 plastics fraction 600 increases from approximately 70 to 80% after one pass, to more than 80% after two passes, and after three or four passes, plus possibly a final picking belt (not shown) where operators remove by-hand non-Tier 1 plastics, increases to approximately more than 90%. It is desirable for the resultant Tier 1 waste product to have a 90% or more (such as more than 95%) purity level.

In this sequence the non-Tier 1 plastics, separated from the Tier 1 plastics by the near infra-red separator 610 is passed to another near infra-red separator 615 for the purpose of producing a stream of Tier 2 plastics 650. To improve the purity of the stream the output of the near infrared separator 610 is passed through another near infrared separator 630 and then through another near infrared separator 640. This last near infrared separator 640 separates Tier 1 plastics from the high purity Tier 2 plastics as it is known that some Tier 1 plastics will not have been removed and may have been classified incorrectly further upstream due to the quantity of other material possibly masking them as they pass through the separators.

The non-Tier 2 waste produced by the near infrared separators 615, 630 are passed to a near infrared separator 660 which produces two streams. One stream is passed to another near infrared separator 670 which produces a Tier 3 plastics stream 690, after passing a picking belt 680 to remove paper and card 750 and other non-desired materials (residue 740). The non-Tier 3 stream from this near infrared separator 670 is sent to another ferrous metal removal station 720 to add to the ferrous metals 565 collected before, and other non-desired materials to add to the residue 740 collected before after passing through a picking belt 730.

The other stream produced by near infrared separator 660 is passed to a near infrared separator 700 to separate the waste into uPVC plastics 710 and Tier 3 plastics 690. The Tier 3 plastics stream from this near infrared separator 700 may join the input into near infrared separator 670 as described above.

Following the other split stream from the splitter 540, the material is passed to a non-ferrous metal removal station 560 which may use an eddy current generator magnet to remove non-ferrous metals and collect them together 565 for onward re-cycling/disposal.

The waste then passes through a near-infrared separator 570 to separate the waste into Tier 1 plastics and Tier 2 plastics. The Tier 1 plastics stream passes to near infrared separator 580 where it follows the same process as described above with reference to this near infrared separator 580.

The Tier 2 plastics stream passes to a near infrared separator 620 to separate the plastics into Tier 2 plastics and non-Tier 2 plastics. The Tier 2 plastics stream joins the input of near infrared separator 630 where it follows the same process as described above with reference to this near infrared separator 630.

The non-Tier 2 plastics stream joins the input of near infrared separator 660 where it follows the same process as described above with reference to this near infrared separator 660.

It is possible, that instead of two non-ferrous removal stations 550, 560 being located downstream of the splitter 540, they are combined into a single station located immediately upstream of the splitter.

It is desirable for the resultant Tier 2 waste product to have a 90% or more (such as more than 95%) purity level. It is to be understood that more or less near infrared separators may be employed as compared to those described herein, as required, and to suit the initial waste material.

## Claims

1. A method of processing waste material to produce various grades of plastics comprising the steps of:
(a) receiving (100) waste material;
(b) mechanically separating the waste material into at least three size fractions;
(c) removing at least some metallic objects from one of the at least three size fractions;
**characterised in that**, the method further comprises the steps of:
(d) splitting the one size fraction, after at least some metallic objects have been removed from it, into at least two streams;
(e) mechanically sorting the at least two streams, using a sequence of near-infrared spectroscopy separators (200, 210, 220, 230, 234, 250, 252, 260, 280, 320, 327, 330), to produce at least three product streams, a first product stream comprising substantially only one or more of polypropylene plastics, polyethylene plastics and polybromide plastics, a second product stream comprising substantially only one or more of polyethylene terephthalate plastics, polyethersulfone plastics and polycarbonate plastics, and a third product stream comprising substantially only one or more of polyurethane plastics, PVC plastics, polystyrene plastics, polyamide plastics, ABS, PTFE, latex and silicone plastics; and
(f) mechanically sorting each of the at least three product streams, using the sequence of near-infrared spectroscopy separators (200, 210, 220, 230, 234, 250, 252, 260, 280, 320, 327, 330), to reduce the amount of materials other than polypropylene plastics, polyethylene plastics and polybromide plastics in the first product stream, polyethylene terephthalate plastics, polyethersulfone plastics and polycarbonate plastics in the second product stream, and polyurethane plastics, PVC plastics, polystyrene plastics, polyamide plastics, ABS, PTFE, latex and silicone plastics in the third product stream, and wherein the step of mechanically sorting each of the at least three product streams is repeated until the purity level of at least one of the at least three product streams reaches at least 90 percent.

2. The method of claim 1, further comprising the step of sorting by hand the at least three product streams to reduce the amount of materials other than polypropylene plastics, polyethylene plastics and polybromide plastics in the first product stream, polyethylene terephthalate plastics, polyethersulfone plastics and polycarbonate plastics in the second product stream, and polyurethane plastics, PVC plastics, polystyrene plastics, polyamide plastics, ABS, PTFE, latex and silicone plastics in the third product stream.

3. The method of any preceding claim, further comprising the step of shredding one of the other of the at least three size fractions and returning it to step (b).

4. The method of claim 3, wherein the size fraction shredded has a size greater than 150mm.

5. The method of either one of claims 3 and 4, wherein one of the at least three size fractions consists of materials less than 50mm.

6. The method of any preceding claim, wherein the at least one of the three size fractions created in step (b) has a size range in the range 50 to 150mm.

7. The method of any preceding claim, wherein the step of mechanically sorting each of the at least three product streams is repeated until the purity level of at least two of the at least three product streams reaches at least 90%.

8. The method of any one of claims 2 to 7, wherein the step of sorting by hand is employed to increase the purity of at least one of the at least three product streams to above 90%.

9. The method of any one of claims 2 to 7, wherein the step of sorting by hand is employed to increase the purity of at least one of the at least three product streams to above 95%.

10. The method of any preceding claim, further comprising the step of sorting by hand the waste material after step (b) and before step (c) in claim 1 to remove non-plastics material and black plastics material.

11. The method of claim 1, wherein step (b) is effected by:
passing the waste over a screen, and separating the waste into the at least three size fractions, namely, an over-size fraction, an undersize fraction and a middle size fraction, the middle size fraction comprising waste sized between the over-size fraction and the undersize fraction, wherein the middle size fraction is the one size fraction in steps (c) to (d);
sending the oversize fraction to a shredder for size reduction, and returning it to the screen;
collecting the undersize fraction for onward treatment and/or disposal; and
passing the middle size fraction to a picking belt, where operators remove by hand and separately collect objects which are not plastics, or which are black plastic, for onward re-cycling;
and wherein step (c) is effected by:
passing the middle size fraction to a ferrous metal removal station to remove ferrous metals and collect them together for onward re-cycling/disposal; and passing the one size fraction to a non-ferrous metal removal station to remove non-ferrous metals and collect them together for onward re-cycling/disposal;
and wherein step (d) is effected by:
passing the middle size fraction to a splitter, which splits the middle size fraction into the at least two streams;
and wherein step (e) is effected by:
passing the first of the at least two streams through the sequence of near-infrared spectroscopy separators, at each stage removing materials which are not polypropylene plastics, polyethylene plastics and polybromide plastics, to produce the first product stream, such that the purity of the first product stream increases from approximately 70 to 80% after one pass, to more than 80% after two passes;
passing the first product stream through a picking belt, where operators remove by hand materials which are not polypropylene plastics, polyethylene plastics and polybromide plastics, such that the purity of the first product stream increases to more than 90%;
passing the materials removed from the first stream which are not polypropylene plastics, polyethylene plastics and polybromide plastics to another near infra-red spectroscopy separator, which separates the materials into a plastics stream and a paper/card stream;
passing the plastics stream to another sequence of near infra-red spectroscopy separators, to produce the second product stream, to remove materials which are not polyethylene terephthalate plastics, polyethersulfone plastics and polycarbonate plastics;
passing the materials removed from the plastics stream and the first stream to another near infra-red spectroscopy separator, which produces metals and the third product stream;
passing the paper/card stream to a picking belt where non paper/card is removed;
passing the second of the at least two streams produced from the split of the middle size fraction to the sequence of near-infrared spectroscopy separators, at each stage removing materials which are not polypropylene plastics, polyethylene plastics and polybromide plastics;
passing the second stream to another near-infrared spectroscopy separator, then processing the second stream along with the first stream after the first stream has passed through the sequence of near infra-red spectroscopy separators; and
passing the materials removed from the second stream to the near infra-red spectroscopy separator which receives the materials removed from the plastics stream and the first stream, for further processing, thereby producing the at least three product streams.

12. A system adapted to perform the methods of any of claims 1 to 11, the system comprising:
receiving means configured to receive waste material;
a first separator configured to mechanically separate the waste material into at least three size fractions; and
a sequence of near-infrared spectroscopy separators (200, 210, 220, 230, 234, 250, 252, 260, 280, 320, 327, 330) configured to (i) mechanically sort at least two streams, the at least two streams formed by (c) removing at least some metallic objects from one of the at least three size fractions and (d) splitting the one size fraction after at least some metallic objects have been removed from it, to produce at least three product streams, a first product stream comprising substantially only one or more of polypropylene plastics, polyethylene plastics and polybromide plastics, a second product stream comprising substantially only one or more of polyethylene terephthalate plastics, polyethersulfone plastics and polycarbonate plastics, and a third product stream comprising substantially only one or more of polyurethane plastics, PVC plastics, polystyrene plastics, polyamide plastics, ABS, PTFE, latex and silicone plastics and (ii) mechanically sort each of the at least three product streams to reduce the amount of materials other than polypropylene plastics, polyethylene plastics and polybromide plastics in the first product stream, polyethylene terephthalate plastics, polyethersulfone plastics and polycarbonate plastics in the second product stream, and polyurethane plastics, PVC plastics, polystyrene plastics, polyamide plastics, ABS, PTFE, latex and silicone plastics in the third product stream,
wherein the sequence of near-infrared spectroscopy separators is further configured to mechanically sort each of the at least three product streams repeatedly until the purity level of at least one of the at least three product streams reaches at least 90 percent.

13. A computer program comprising instructions to cause the system of claim 12 to execute the steps of the method of claim 1.

## Patentansprüche

1. Verfahren zur Verarbeitung von Abfallmaterial zur Herstellung verschiedener Kunststoffklassen, umfassend die Schritte:
(a) Empfangen (100) von Abfallmaterial;
(b) mechanisches Trennen des Abfallmaterials in mindestens drei Größenfraktionen;
(c) Entfernen von mindestens einigen metallischen Gegenständen aus einer der mindestens drei Größenfraktionen;
**dadurch gekennzeichnet, dass** das Verfahren ferner die Schritte umfasst:
(d) Aufteilen der einen Größenfraktion, nachdem mindestens einige metallische Gegenstände daraus entfernt wurden, in mindestens zwei Ströme;
(e) mechanisches Sortieren der mindestens zwei Ströme unter Verwendung einer Abfolge von Nahinfrarotspektroskopie-Abscheidern (200, 210, 220, 230, 234, 250, 252, 260, 280, 320, 327, 330), um mindestens drei Produktströme zu erzeugen, wobei ein erster Produktstrom im Wesentlichen nur einen oder mehrere aus Polypropylen-Kunststoffen, Polyethylen-Kunststoffen und Polybromid-Kunststoffen umfasst, ein zweiter Produktstrom im Wesentlichen nur einen oder mehrere aus Polyethylenterephthalat-Kunststoffen, Polyethersulfon-Kunststoffen und Polycarbonat-Kunststoffen umfasst, und ein dritter Produktstrom im Wesentlichen nur einen oder mehrere aus Polyurethan-Kunststoffen, PVC-Kunststoffen, Polystyrol-Kunststoffen, Polyamid-Kunststoffen, ABS, PTFE, Latex und Silikon-Kunststoffen umfasst; und
(f) mechanisches Sortieren jedes der mindestens drei Produktströme unter Verwendung der Abfolge von Nahinfrarotspektroskopie-Abscheidern (200, 210, 220, 230, 234, 250, 252, 260, 280, 320, 327, 330), um die Menge an anderen Materialien als Polypropylen-Kunststoffen, Polyethylen-Kunststoffen und Polybromid-Kunststoffen im ersten Produktstrom, Polyethylenterephthalat-Kunststoffen, Polyethersulfon-Kunststoffen und Polycarbonat-Kunststoffen im zweiten Produktstrom und Polyurethan-Kunststoffen, PVC-Kunststoffen, Polystyrol-Kunststoffen, Polyamid-Kunststoffen, ABS, PTFE, Latex und Silikon-Kunststoffen im dritten Produktstrom zu verringern, und wobei der Schritt des mechanischen Sortierens jedes der mindestens drei Produktströme wiederholt wird, bis der Reinheitsgrad von mindestens einem der mindestens drei Produktströme mindestens 90 Prozent erreicht.

2. Verfahren nach Anspruch 1, ferner umfassend den Schritt des Sortierens von Hand der mindestens drei Produktströme, um die Menge an anderen Materialien als Polypropylen-Kunststoffen, Polyethylen-Kunststoffen und Polybromid-Kunststoffen im ersten Produktstrom, Polyethylenterephthalat-Kunststoffen, Polyethersulfon-Kunststoffen und Polycarbonat-Kunststoffen im zweiten Produktstrom und Polyurethan-Kunststoffen, PVC-Kunststoffen, Polystyrol-Kunststoffen, Polyamid-Kunststoffen, ABS, PTFE, Latex und Silikon-Kunststoffen im dritten Produktstrom zu verringern.

3. Verfahren nach einem der vorhergehenden Ansprüche, ferner umfassend den Schritt des Zerkleinerns einer der anderen der mindestens drei Größenfraktionen und deren Rückführung zu Schritt (b).

4. Verfahren nach Anspruch 3, wobei die zerkleinerte Größenfraktion eine Größe von mehr als 150 mm aufweist.

5. Verfahren nach einem der Ansprüche 3 und 4, wobei eine der mindestens drei Größenfraktionen aus Materialien von weniger als 50 mm besteht.

6. Verfahren nach einem der vorhergehenden Ansprüche, wobei die mindestens eine der in Schritt (b) erzeugten drei Größenfraktionen einen Größenbereich im Bereich von 50 bis 150 mm aufweist.

7. Verfahren nach einem der vorhergehenden Ansprüche, wobei der Schritt des mechanischen Sortierens jedes der mindestens drei Produktströme wiederholt wird, bis der Reinheitsgrad von mindestens zwei der mindestens drei Produktströme mindestens 90 % erreicht.

8. Verfahren nach einem der Ansprüche 2 bis 7, wobei der Schritt des Sortierens von Hand eingesetzt wird, um die Reinheit von mindestens einem der mindestens drei Produktströme auf über 90 % zu erhöhen.

9. Verfahren nach einem der Ansprüche 2 bis 7, wobei der Schritt des Sortierens von Hand eingesetzt wird, um die Reinheit von mindestens einem der mindestens drei Produktströme auf über 95 % zu erhöhen.

10. Verfahren nach einem der vorhergehenden Ansprüche, ferner umfassend den Schritt des Sortierens des Abfallmaterials von Hand nach Schritt (b) und vor Schritt (c) in Anspruch 1, um Nicht-Kunststoffmaterial und schwarzes Kunststoffmaterial zu entfernen.

11. Verfahren nach Anspruch 1, wobei Schritt (b) bewirkt wird durch:
Leiten des Abfalls über ein Sieb und Trennen des Abfalls in die mindestens drei Größenfraktionen, nämlich eine Überkornfraktion, eine Unterkornfraktion und eine mittlere Größenfraktion, wobei die mittlere Größenfraktion Abfall mit einer Größe zwischen der Überkornfraktion und der Unterkornfraktion umfasst, wobei die mittlere Größenfraktion die eine Größenfraktion in den Schritten (c) bis (d) ist;
Zuführen der Überkornfraktion zu einem Zerkleinerer zur Größenreduzierung und deren Rückführung zum Sieb;
Sammeln der Unterkornfraktion zur Weiterbehandlung und/oder Entsorgung; und
Leiten der mittleren Größenfraktion zu einem Sortierband, wo Bediener von Hand Gegenstände, die keine Kunststoffe sind oder bei denen es sich um schwarzen Kunststoff handelt, entfernen und separat zur Weiterverwertung sammeln;
und wobei Schritt (c) bewirkt wird durch:
Leiten der mittleren Größenfraktion zu einer Eisenmetall-Entfernungsstation, um Eisenmetalle zu entfernen und sie zur Weiterverwertung/Entsorgung zusammenzusammeln; und
Leiten der einen Größenfraktion zu einer Nichteisenmetall-Entfernungsstation, um Nichteisenmetalle zu entfernen und sie zur Weiterverwertung/Entsorgung zusammenzusammeln;
und wobei Schritt (d) bewirkt wird durch:
Leiten der mittleren Größenfraktion zu einem Teiler, welcher die mittlere Größenfraktion in die mindestens zwei Ströme aufteilt;
und wobei Schritt (e) bewirkt wird durch:
Leiten des ersten der mindestens zwei Ströme durch eine Abfolge von Nahinfrarotspektroskopie-Abscheidern, wobei auf jeder Stufe Materialien entfernt werden, die keine Polypropylen-Kunststoffe, Polyethylen-Kunststoffe und Polybromid-Kunststoffe sind, um den ersten Produktstrom zu erzeugen, sodass sich die Reinheit des ersten Produktstroms von etwa 70 bis 80 % nach einem Durchgang auf mehr als 80 % nach zwei Durchgängen erhöht;
Leiten des ersten Produktstroms durch ein Sortierband, wo Bediener von Hand Materialien entfernen, die keine Polypropylen-Kunststoffe, Polyethylen-Kunststoffe und Polybromid-Kunststoffe sind, sodass sich die Reinheit des ersten Produktstroms auf mehr als 90 % erhöht;
Leiten der aus dem ersten Strom entfernten Materialien, die keine Polypropylen-Kunststoffe, Polyethylen-Kunststoffe und Polybromid-Kunststoffe sind, zu einem weiteren Nahinfrarotspektroskopie-Abscheider, welcher die Materialien in einen Kunststoffstrom und einen Papier/Karton-Strom trennt;
Leiten des Kunststoffstroms zu einer weiteren Abfolge von Nahinfrarotspektroskopie-Abscheidern, um den zweiten Produktstrom zu erzeugen, um Materialien zu entfernen, die keine Polyethylenterephthalat-Kunststoffe, Polyethersulfon-Kunststoffen und Polycarbonat-Kunststoffe sind;
Leiten des aus dem Kunststoffstrom und dem ersten Strom entfernten Materials zu einem weiteren Nahinfrarotspektroskopie-Abscheider, welcher Metalle und den dritten Produktstrom erzeugt;
Leiten des Papier/Karton-Stroms zu einem Sortierband, wo Nicht-Papier/Karton entfernt wird;
Leiten des zweiten der mindestens zwei Ströme, die aus der Aufteilung der mittleren Größenfraktion erzeugt wurden, zu einer Abfolge von Nahinfrarotspektroskopie-Abscheidern, wobei auf jeder Stufe Materialien entfernt werden, die keine Polypropylen-Kunststoffe, Polyethylen-Kunststoffe und Polybromid-Kunststoffe sind;
Leiten des zweiten Stroms zu einem weiteren Nahinfrarotspektroskopie-Abscheider, anschließendes Verarbeiten des zweiten Stroms zusammen mit dem ersten Strom, nachdem der erste Strom die Abfolge von Nahinfrarotspektroskopie-Abscheidern durchlaufen hat; und
Leiten der aus dem zweiten Strom entfernten Materialien zu dem Nahinfrarotspektroskopie-Abscheider, welcher die aus dem Kunststoffstrom und dem ersten Strom entfernten Materialien empfängt, zur weiteren Verarbeitung, wodurch die mindestens drei Produktströme erzeugt werden.

12. System, das zur Durchführung der Verfahren nach einem der Ansprüche 1 bis 11 eingerichtet ist, wobei das System umfasst:
Empfangsmittel, die so konfiguriert sind, dass sie Abfallmaterial empfangen;
einen ersten Abscheider, der so konfiguriert ist, dass er das Abfallmaterial mechanisch in mindestens drei Größenfraktionen trennt; und
eine Abfolge von Nahinfrarotspektroskopie-Abscheidern (200, 210, 220, 230, 234, 250, 252, 260, 280, 320, 327, 330), die so konfiguriert ist, dass sie:
(i) mindestens zwei Ströme mechanisch sortiert, wobei die mindestens zwei Ströme gebildet werden durch (c) Entfernen von mindestens einigen metallischen Gegenständen aus einer der mindestens drei Größenfraktionen und (d) Aufteilen der einen Größenfraktion, nachdem mindestens einige metallische Gegenstände daraus entfernt wurden, um mindestens drei Produktströme zu erzeugen, wobei ein erster Produktstrom im Wesentlichen nur einen oder mehrere aus Polypropylen-Kunststoffen, Polyethylen-Kunststoffen und Polybromid-Kunststoffen umfasst, ein zweiter Produktstrom im Wesentlichen nur einen oder mehrere aus Polyethylenterephthalat-Kunststoffen, Polyethersulfon-Kunststoffen und Polycarbonat-Kunststoffen umfasst, und ein dritter Produktstrom im Wesentlichen nur einen oder mehrere aus Polyurethan-Kunststoffen, PVC-Kunststoffen, Polystyrol-Kunststoffen, Polyamid-Kunststoffen, ABS, PTFE, Latex und Silikon-Kunststoffen umfasst; und
(ii) jeden der mindestens drei Produktströme mechanisch sortiert, um die Menge an anderen Materialien als Polypropylen-Kunststoffen, Polyethylen-Kunststoffen und Polybromid-Kunststoffen im ersten Produktstrom, Polyethylenterephthalat-Kunststoffen, Polyethersulfon-Kunststoffen und Polycarbonat-Kunststoffen im zweiten Produktstrom und Polyurethan-Kunststoffen, PVC-Kunststoffen, Polystyrol-Kunststoffen, Polyamid-Kunststoffen, ABS, PTFE, Latex und Silikon-Kunststoffen im dritten Produktstrom zu verringern, wobei die Abfolge von Nahinfrarotspektroskopie-Abscheidern ferner so konfiguriert ist, dass sie jeden der mindestens drei Produktströme wiederholt mechanisch sortiert, bis der Reinheitsgrad von mindestens einem der mindestens drei Produktströme mindestens 90 Prozent erreicht.

13. Computerprogramm, umfassend Befehle, um das System nach Anspruch 12 zu veranlassen, die Schritte des Verfahrens nach Anspruch 1 auszuführen.

## Revendications

1. - Procédé de traitement de déchets pour produire différentes qualités de matières plastiques, comprenant les étapes consistant à :
(a) recevoir (100) des déchets ;
(b) séparer mécaniquement les déchets en au moins trois fractions granulométriques ;
(c) retirer au moins une partie d'objets métalliques de l'une des au moins trois fractions granulométriques ;
**caractérisé par le fait que** le procédé comprend en outre les étapes consistant à :
(d) diviser ladite fraction granulométrique, après qu'au moins une partie d'objets métalliques en a été retirée, en au moins deux courants ;
(e) trier mécaniquement les au moins deux courants, à l'aide d'une série de séparateurs par spectroscopie dans le proche infrarouge (200, 210, 220, 230, 234, 250, 252, 260, 280, 320, 327, 330), afin de produire au moins trois courants de produit, un premier courant de produit comprenant sensiblement seulement au moins l'une parmi les matières plastiques à base de polypropylène, les matières plastiques à base de polyéthylène et les matières plastiques à base de polybromure, un deuxième courant de produit comprenant sensiblement seulement au moins l'une parmi les matières plastiques à base de poly(téréphtalate d'éthylène), les matières plastiques à base de polyéthersulfone et les matières plastiques à base de polycarbonate, et un troisième courant de produit comprenant sensiblement seulement au moins l'un parmi les matières plastiques à base de polyuréthane, les matières plastiques à base de PVC, les matières plastiques à base de polystyrène, les matières plastiques à base de polyamide, l'ABS, le PTFE, le latex et les matières plastiques à base de silicone ; et
(f) trier mécaniquement chacun des au moins trois courants de produit, à l'aide de la série de séparateurs par spectroscopie dans le proche infrarouge (200, 210, 220, 230, 234, 250, 252, 260, 280, 320, 327, 330), afin de réduire la quantité de matériaux autres que les matières plastiques à base de polypropylène, les matières plastiques à base de polyéthylène et les matières plastiques à base de polybromure dans le premier courant de produit, les matières plastiques à base de poly(téréphtalate d'éthylène), les matières plastiques à base de polyéthersulfone et les matières plastiques à base de polycarbonate dans le deuxième courant de produit, et les matières plastiques à base de polyuréthane, les matières plastiques à base de PVC, les matières plastiques à base de polystyrène, les matières plastiques à base de polyamide, l'ABS, le PTFE, le latex et les matières plastiques à base de silicone dans le troisième courant de produit, et l'étape consistant à trier mécaniquement chacun des au moins trois courants de produit étant répétée jusqu'à ce que le niveau de pureté d'au moins l'un des au moins trois courants de produit atteigne au moins 90 pour cent.

2. - Procédé selon la revendication 1, comprenant en outre l'étape consistant à trier manuellement les au moins trois courant de produit afin de réduire la quantité de matériaux autres que les matières plastiques à base de polypropylène, les matières plastiques à base de polyéthylène et les matières plastiques à base de polybromure dans le premier courant de produit, les matières plastiques à base de poly(téréphtalate d'éthylène), les matières plastiques à base de polyéthersulfone et les matières plastiques à base de polycarbonate dans le deuxième courant de produit, et les matières plastiques à base de polyuréthane, les matières plastiques à base de PVC, les matières plastiques à base de polystyrène, les matières plastiques à base de polyamide, l'ABS, le PTFE, le latex et les matières plastiques à base de silicone dans le troisième courant de produit.

3. - Procédé selon l'une quelconque des revendications précédentes, comprenant en outre l'étape consistant à déchiqueter l'une des autres des au moins trois fractions granulométriques et à la renvoyer à l'étape (b).

4. - Procédé selon la revendication 3, dans lequel la fraction granulométrique déchiquetée a une taille supérieure à 150 mm.

5. - Procédé selon l'une des revendications 3 et 4, dans lequel l'une des au moins trois fractions granulométriques consiste en matériaux de taille inférieure à 50 mm.

6. - Procédé selon l'une quelconque des revendications précédentes, dans lequel l'au moins une des trois fractions granulométriques créées à l'étape (b) a une plage de taille dans la plage de 50 à 150 mm.

7. - Procédé selon l'une quelconque des revendications précédentes, dans lequel l'étape consistant à trier mécaniquement chacun des au moins trois courants de produit est répétée jusqu'à ce que le niveau de pureté d'au moins deux des au moins trois courants de produit atteigne au moins 90 %.

8. - Procédé selon l'une quelconque des revendications 2 à 7, dans lequel l'étape consistant à trier manuellement est utilisée pour augmenter la pureté d'au moins l'un des au moins trois courants de produit à plus de 90 %.

9. - Procédé selon l'une quelconque des revendications 2 à 7, dans lequel l'étape consistant à trier manuellement est utilisée pour augmenter la pureté d'au moins l'un des au moins trois courants de produit à plus de 95 %.

10. - Procédé selon l'une quelconque des revendications précédentes, comprenant en outre l'étape consistant à trier manuellement les déchets après l'étape (b) et avant l'étape (c) de la revendication 1 afin de retirer les matières non plastiques et les matières plastiques noires.

11. - Procédé selon la revendication 1, dans lequel l'étape (b) est effectuée par les opérations consistant à :
faire passer les déchets sur un tamis, et séparer les déchets en les au moins trois fractions granulométriques, à savoir, une fraction surdimensionnée, une fraction sous-dimensionnée et une fraction de taille intermédiaire, la fraction de taille intermédiaire comprenant des déchets dont la taille se situe entre la taille de la fraction surdimensionnée et la taille de la fraction sous-dimensionnée, la fraction de taille intermédiaire étant la fraction granulométrique des étapes (c) à (d) ;
envoyer la fraction surdimensionnée dans une déchiqueteuse pour en réduire la taille, et la renvoyer au tamis ;
collecter la fraction sous-dimensionnée pour un traitement ultérieur et/ou une mise au rebut ultérieure ; et
faire passer la fraction de taille intermédiaire sur une bande de triage, où des opérateurs retirent manuellement et collectent séparément des objets qui ne sont pas des matières plastiques, ou qui sont des matières plastiques noires, pour leur recyclage ultérieur ;
et dans lequel l'étape (c) est effectuée par les opérations consistant à:
faire passer la fraction de taille intermédiaire dans une station de retrait des métaux ferreux afin de retirer les métaux ferreux et de les collecter ensemble pour leur recyclage ultérieur/leur mise au rebut ultérieure ; et
faire passer ladite fraction granulométrique dans une station de retrait des métaux non ferreux afin de retirer les métaux non ferreux et de les collecter ensemble pour leur recyclage ultérieur/leur mise au rebut ultérieure ;
et dans lequel l'étape (d) est effectuée par les opérations consistant à :
faire passer ladite fraction granulométrique dans un diviseur, lequel divise la fraction de taille intermédiaire en les au moins deux courants ;
et dans lequel l'étape (e) est effectuée par les opérations cosistant à:
faire passer le premier des au moins deux courants à travers la série de séparateurs par spectroscopie dans le proche infrarouge, retirant à chaque étage des matériaux qui ne sont pas des matières plastiques à base de polypropylène, des matières plastiques à base de polyéthylène et des matières plastiques à base de polybromure, afin de produire le premier courant de produit, de telle sorte que la pureté du premier courant de produit augmente d'environ 70 à 80 % après une passe, à plus de 80 % après deux passes ;
faire passer le premier courant de produit sur une bande de triage, où des opérateurs retirent manuellement des matériaux qui ne sont pas des matières plastiques à base de polypropylène, des matières plastiques à base de polyéthylène et des matières plastiques à base de polybromure, de sorte que la pureté du premier courant de produit augmente à plus de 90 % ;
faire passer les matériaux retirés du premier courant, qui ne sont pas des matières plastiques à base de polypropylène, des matières plastiques à base de polyéthylène et des matières plastiques à base de polybromure, dans un autre séparateur par spectroscopie dans le proche infrarouge, lequel sépare les matériaux en un courant de matières plastiques et un courant de papier/carton;
faire passer le courant de matières plastiques dans une autre série de séparateurs par spectroscopie dans le proche infrarouge, afin de produire le deuxième courant de produit, retirant des matériaux qui ne sont pas des matières plastiques à base de poly(téréphtalate d'éthylène), des matières plastiques à base de polyéthersulfone et des matières plastiques à base de polycarbonate ;
faire passer les matériaux retirés du courant de matières plastiques et du premier courant dans un autre séparateur par spectroscopie dans le proche infrarouge, lequel produit des métaux et le troisième courant de produit ;
faire passer le courant de papier/carton sur une bande de triage où des matériaux autres que le papier/carton sont retirés ;
faire passer le deuxième des au moins deux courants issus de la division de la fraction de taille intermédiaire dans la série de séparateurs par spectroscopie dans le proche infrarouge, retirant à chaque étage des matériaux qui ne sont pas des matières plastiques à base de polypropylène, des matières plastiques à base de polyéthylène et des matières plastiques à base de polybromure;
faire passer le deuxième courant dans un autre séparateur par spectroscopie dans le proche infrarouge, puis traiter le deuxième courant conjointement avec le premier courant après que le premier courant a traversé la série de séparateurs par spectroscopie dans l'infrarouge proche ; et
faire passer les matériaux retirés du deuxième courant dans le séparateur par spectroscopie dans le proche infrarouge qui reçoit les matériaux retirés du courant de matières plastiques et du premier courant, pour un traitement ultérieur, produisant ainsi les au moins trois courants de produit.

12. - Système apte à réaliser les procédés selon l'une quelconque des revendications 1 à 11, le système comprenant :
des moyens de réception configurés pour recevoir des déchets ;
un premier séparateur configuré pour séparer mécaniquement les déchets en au moins trois fractions granulométriques ; et
une série de séparateurs par spectroscopie dans le proche infrarouge (200, 210, 220, 230, 234, 250, 252, 260, 280, 320, 327, 330) configurés pour (i) trier mécaniquement au moins deux courants, les au moins deux courants étant formés par (c) le retrait d'au moins une partie d'objets métalliques de l'une des au moins trois fractions granulométriques et (d) la division de ladite fraction granulométrique après qu'au moins une partie d'objets métalliques en a été retirée, afin de produire au moins trois courants de produit, un premier courant de produit comprenant sensiblement seulement au moins l'une parmi les matières plastiques à base de polypropylène, les matières plastiques à base de polyéthylène et les matières plastiques à base de polybromure, un deuxième courant de produit comprenant sensiblement seulement au moins l'une parmi les matières plastiques à base de poly(téréphtalate d'éthylène), les matières plastiques à base de polyéthersulfone et les matières plastiques à base de polycarbonate, et un troisième courant de produit comprenant sensiblement seulement au moins l'un parmi les matières plastiques à base de polyuréthane, les matières plastiques à base de PVC, les matières plastiques à base de polystyrène, le les matières plastiques à base de polyamide, l'ABS, le PTFE, le latex et les matières plastiques à base de silicone ; et (ii) trier mécaniquement chacun des au moins trois courants de produit afin de réduire la quantité de matériaux autres que les matières plastiques à base de polypropylène, les matières plastiques à base de polyéthylène et les matières plastiques à base de polybromure dans le premier courant de produit, les matières plastiques à base de poly(téréphtalate d'éthylène), les matières plastiques à base de polyéthersulfone et les matières plastiques à base de polycarbonate dans le deuxième courant de produit, et les matières plastiques à base de polyuréthane, les matières plastiques à base de PVC, les matières plastiques à base de polystyrène, les matières plastiques à base de polyamide, l'ABS, le PTFE, le latex et les matières plastiques à base de silicone dans le troisième courant de produit,
dans lequel la série de séparateurs par spectroscopie dans le proche infrarouge est en outre configurée pour trier mécaniquement chacun des au moins trois courants de produit de manière répétée jusqu'à ce que le niveau de pureté d'au moins l'un des au moins trois courants de produit atteigne au moins 90 pour cent.

13. - Programme informatique comprenant des instructions destinées à amener le système selon la revendication 12 à exécuter les étapes du procédé selon la revendication 1.
